# FASCICULE DE BREVET EUROPEEN

(11) **EP 1 994 765 B1**
(45) Date de publication et mention de la délivrance du brevet: **18.01.2017**
(21) Numéro de dépôt: 07731730.3
(22) Date de dépôt: 12.03.2007
(51) Int. Cl.: H04N 21/242

(54) **GENERATION ET EXPLOITATION D'UN DOUBLE DESCRIPTEUR TEMPOREL POUR LA TRANSMISSION D'UN SIGNAL DE SYNCHRONISATION DANS UN RESEAU A COMMUTATION PAR PAQUETS**
ERZEUGUNG UND BETRIEB EINES TEMPORÄREN DOPPELDESKRIPTORS ZUR ÜBERTRAGUNG EINES SYNCHRONISATIONSSIGNALS IN EINEM PAKETNETZ
GENERATING AND OPERATING A DOUBLE TEMPORAL DESCRIPTOR FOR TRANSMITTING A SYNCHRONIZING SIGNAL IN A PACKET NETWORK

(30) Priorité: 13.03.2006 FR 0650836
(43) Date de publication de la demande: 26.11.2008
(73) Titulaire: Thomson Licensing SA, 92130 Issy-les-Moulineaux (FR)
(72) Inventeur: DEFRANCE, Serge, F-35700 Rennes (FR); TAPIE, Thierry, F-RENNES 35700 (FR); MACE, Gael, F-35850 Langan (FR)
(74) Mandataire: Huchet, Anne
(86) Numéro de dépôt international: PCT/FR2007/050914
(87) Numéro de publication internationale: WO 2007/104888

(56) Documents cités:
- WO-A1-2007/051282
- US-A- 5 805 602
- US-A1- 2006 013 262

## Description

### Domaine de l'invention

La présente invention se rapporte au domaine des réseaux de communication.

La présente invention se rapporte plus particulièrement à un dispositif apte à émettre des paquets et à un dispositif apte à recevoir des paquets dans un réseau de communication par paquets comportant au moins deux stations. Un double descripteur temporel est généré à l'émission et exploité à la réception pour la transmission d'un signal de synchronisation, de préférence de type Genlock (verrouillage de synchronisation) dans un réseau à commutation par paquets, qui est de préférence de type IP (*Internet Protocol).*

### Etat de la technique

Le développement des réseaux IP et leur capacité à transporter tout type de signaux (données ou vidéo) font qu'il est envisagé d'utiliser de tels réseaux comme architecture *« backbone »* pour les studios vidéo. Un intérêt majeur de cette évolution est d'avoir une infrastructure unique pour le transport de données. Alors que dans le passé, plusieurs médias étaient nécessaires pour transporter différents types de signaux, seul un câble est maintenant nécessaire grâce aux possibilités de multiplexage offertes par la couche IP.

Parmi les différents signaux qui doivent être transportés sur le réseau IP, on trouve le signal Genlock. Ce signal est spécifique à l'environnement des studios vidéo. Il est utilisé pour synchroniser différents équipements vidéo, comme des caméras. Un signal Genlock est composé de deux signaux de synchronisation, l'un est répété toutes les 40 ms et indique le début de la trame vidéo, l'autre est répété toutes les 64 µs (pour un format standard et moins pour un format HD) et indique le début des lignes dans la trame vidéo.

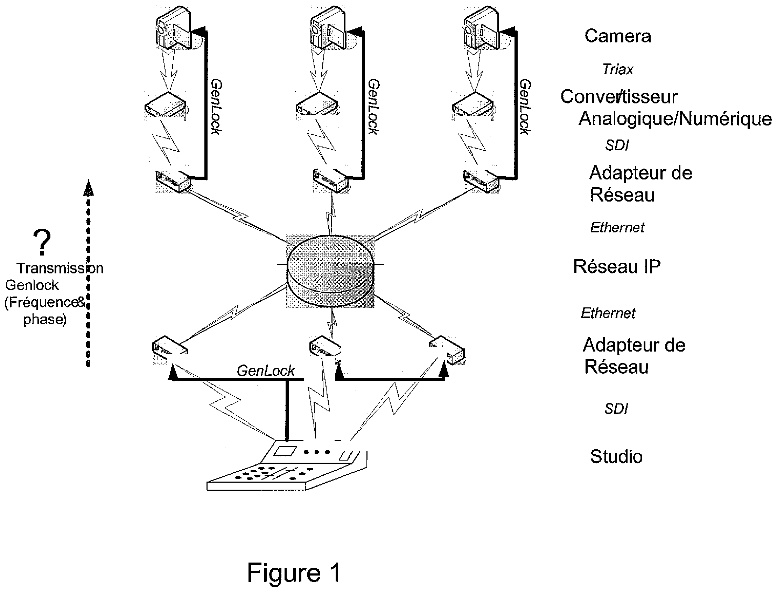

La Figure 1 représente la transmission d'un signal Genlock à travers un réseau IP dans un environnement de studio vidéo. Sur cette Figure, des caméras sont reliés à des convertisseurs anologique/numérique connectés à des adaptateurs de réseau, eux-mêmes reliés par Ethernet à un réseau IP. Une console de studio, ainsi qu'éventuellement d'autres éléments de studio, sont connectés au réseau IP par l'intermédiaire d'adaptateurs de réseau. La question qui se pose dans un tel système est la suivante : comment transmettre le signal Genlock entre les caméras et la console de studio et/ou les autres éléments de studio de sorte que le signal Genlock côté réception soit rigoureusement en fréquence et en phase avec le signal Genlock côté émission ?

Le standard IEC 61588 a été conçu pour fournir une horloge synchronisée dans un système informatique distribué multi-vendeurs. Une telle horloge est utile pour coordonner des activités, par exemple un processus industriel, ou corréler des mesures de données dans un réseau de communication par paquets. Une application typique est la synchronisation d'un signal de vidéo Genlock sur différentes caméras connectées au réseau.

Le document US2006/013262 décrit un procédé de synchronisation de dispositifs edgeQAM situés à distance d'un CMTS.

L'art antérieur connaît, par le brevet américain US 5 805 602 (Bell Atlantic Network Services), un système de surveillance de réseau pour la variation du « délai de cellule » (*cell delay*). Ce brevet américain décrit un agencement (appareil et procédé) pour surveiller la gigue causée durant le transport d'informations codées de façon numérique dans un réseau à commutation par paquets, et pour gérer le fonctionnement d'un réseau en fonction de la gigue détectée. La gigue détectée est utilisée pour déterminer si une action corrective est nécessaire, telle qu'un re-routage de trafic réseau ou la réalisation d'opérations de maintenance du réseau. L'agencement décrit détecte des valeurs PCR (*Program Clock Reference*) d'un flux de transport encodé MPEG. Chaque paire de valeurs PCR représente un instant d'arrivée attendu d'un segment de flux correspondant. Un instant d'arrivée réel pour le segment de flux correspondant est déterminé en réponse à la détection de valeurs PCR correspondantes et un signal d'horloge indépendant. L'instant d'arrivée attendu du segment de flux et l'instant d'arrivée réel sont corrélés avec une accumulation des temps d'arrivée attendu et réel des segments de flux de paquets de données reçus précédemment afin de déterminer la gigue dans le flux de données numérique. La gigue est corrigée par une combinaison de techniques adaptatives d'emmagasinement en mémoire tampon (*buffering*) et de recalibrage de la valeur PCR avec les valeurs corrigées coïncidant avec l'instant d'arrivée réel des segments de flux.

Le procédé et le dispositif décrits dans ce brevet américain proposent de comparer l'instant attendu de réception du paquet, reflété par la valeur du PCR, avec l'instant constaté de l'arrivée du paquet, calculé grâce à une base de temps indépendante de la base de temps à transmettre locale à l'appareil de réception. La comparaison est basée sur un compteur local indépendant. On convertit le PCR reçu dans la base de temps locale (les deux paramètres de conversion ont été préalablement calculés sur une dizaine d'échantillons) et on compare avec la valeur du compteur local au moment de la réception. La différence donne la gigue évaluée.

L'invention de ce brevet américain ne permet que la synchronisation en fréquence, et ne permet pas la synchronisation en phase, de deux équipements distants. On se contente dans l'invention de ce brevet américain d'une correction de gigue localisée (« *localized jitter correction » -* colonne 19, ligne 21), ce qui implique que la synchronisation en phase est impossible. Or, la synchronisation en phase de deux bases de temps est nécessaire pour certaines applications, par exemple la synchronisation d'équipements vidéo au sens du Genlock. De plus, l'invention de ce brevet américain s'appuie sur une base de temps indépendante de la base de temps à transmettre propre à l'équipement de réception et base ses calculs sur les instants de réception des paquets contenant les échantillons de type PCR, ce qui implique des équipements spécifiques de détection de l'arrivée de ces paquets.

### Exposé de l'invention

La précision de la synchronisation de l'horloge IEC 61588 ne peut pas satisfaire les contraintes du signal vidéo. C'est la raison pour laquelle il peut être nécessaire de transmettre une horloge vidéo. Dans ce but, il est proposé ici un système à double couches : un système PCR (« *Program Clock Reference* ») classique pour transmettre l'horloge vidéo, et une couche IEC 61588, ou son équivalent, pour rendre la transmission d'un paquet « PCR-like » sans gigue (« *jitter* »).

Le problème technique que la présente invention se propose de résoudre consiste à synchroniser en fréquence et en phase deux équipements reliés entre eux par un réseau de communication par paquets, tout en évitant d'avoir à utiliser des équipements spécifiques de détection de l'arrivée de certains paquets.

A cet effet, la présente invention, telle que définie dans les revendications, concerne, dans son acception la plus générale, un dispositif apte à émettre des paquets dans un réseau de communication par paquets comportant au moins deux stations, comprenant :
- des moyens pour recevoir un signal ;
- des moyens pour dériver une fréquence et une phase à partir dudit signal reçu ;
- des moyens pour initialiser un compteur, dit compteur maître, au moyen de la fréquence et de la phase dérivées ;
caractérisé en ce qu'il comporte :
- des moyens pour échantillonner la valeur du compteur maître à intervalles réguliers ;
- des moyens pour générer un premier descripteur temporel à partir de la valeur échantillonnée du compteur maître ;
- des moyens pour échantillonner un second compteur synchronisé sur toutes les stations du réseau au même instant qu'a lieu l'échantillonnage du compteur maître;
- des moyens pour générer un second descripteur temporel à partir de la valeur échantillonnée du second compteur;
- des moyens pour transmettre ensemble les deux descripteurs temporels dans le réseau.

De préférence, ledit signal reçu est de type Genlock.

Avantageusement, le réseau de communication par paquets est un réseau de type IP (*Internet Protocol*).

Selon une variante préférée, ledit dispositif apte à émettre des paquets dans un réseau de communication par paquets est un équipement vidéo

De préférence, le second compteur synchronisé sur toutes les stations du réseau l'est au moyen du standard IEC 61588.

La présente invention se rapporte également à un dispositif apte à recevoir des paquets dans un réseau de communication par paquets comportant au moins deux stations, caractérisé en ce qu'il comporte :
- des moyens pour échantillonner la valeur d'un premier compteur dit compteur esclave à intervalles réguliers ;
- des moyens pour générer un premier descripteur temporel « Descripteur_temporel_1_RX » à partir de la valeur échantillonnée du compteur esclave ;
- des moyens pour échantillonner un second compteur synchronisé sur toutes les stations du réseau au même instant qu'a lieu l'échantillonnage du compteur esclave ;
- des moyens pour générer un second descripteur temporel « Descripteur_temporel_2_RX » à partir de la valeur échantillonnée du second compteur;
- des moyens pour, à réception d'un paquet comprenant deux descripteurs temporels « Descripteur_temporel_1_TX » et « Descripteur_temporel_2_TX », du réseau, corriger la différence entre « Descripteur_temporel_1_TX » et « Descripteur_temporel_1_RX » au moyen de la différence entre « Descripteur_temporel_2_TX » et « Descripteur_temporel_2_RX » ; et
- des moyens pour réguler le compteur esclave en fonction de ladite différence corrigée.

De préférence, ledit dispositif apte à recevoir des paquets dans un réseau de communication par paquets comporte des moyens pour stocker ensemble les deux descripteurs temporels « Descripteur_temporel_1_RX » et « Descripteur_temporel_2_RX ».

Avantageusement, le réseau de communication par paquets est un réseau de type IP (*Internet Protocol*).

Selon une variante préférée, ledit dispositif apte à recevoir des paquets est un équipement vidéo.

De préférence, le second compteur synchronisé sur toutes les stations du réseau l'est au moyen du standard IEC 61588.

Selon un mode de réalisation, ledit dispositif apte à recevoir des paquets comporte un filtre qui reçoit la différence corrigée et régule le compteur esclave.

Avantageusement, les caractéristiques du filtre déterminent les caractéristiques d'un signal régénéré.

Selon en mode de mise en oeuvre particulier, le signal régénéré est de type Genlock.

### Brève description des dessins

On comprendra mieux l'invention à l'aide de la description, faite ci-après à titre purement explicatif, d'un mode de réalisation de l'invention, en référence aux figures annexées :
- la Figure 1 illustre la transmission d'un signal Genlock à travers un réseau IP dans un environnement de studio vidéo ; et
- la Figure 2 illustre une mise en oeuvre du procédé de génération d'un double descripteur temporel selon la présente invention.

### Description détaillée des modes de réalisation de l'invention

La principale difficulté pour transmettre une horloge dans un réseau IP est due au fait que le temps de transmission de paquet dans le réseau n'est pas constant. La conséquence est qu'il y a toujours une différence de temps entre l'instant auquel le paquet est reçu et l'instant auquel il était supposé être reçu. La différence correspond à la gigue de transmission (« *jitter* »). Sa moyenne est nulle mais, pour chaque paquet, sa valeur n'est pas nulle. Le problème est que, très souvent, l'information de temps contenu dans le paquet est calculée en fonction de son temps d'arrivée prévu. Le temps d'arrivée réel est différent du temps d'arrivée prévu, et la différence est la valeur de gigue pour ce paquet. Par conséquent, l'information de temps contenu dans le paquet est entachée d'une erreur dont la valeur est la valeur de gigue.

La difficulté n'existe plus s'il est possible de calculer le retard de transmission pour chaque paquet. Ceci est possible si on ajoute à chaque descripteur temporel d'horloge vidéo un autre descripteur temporel issu de l'horloge du réseau qui est supposée être déjà synchronisée par d'autres moyens, par exemple le standard IEC 61588. Le second descripteur temporel évalue le temps de transmission du paquet transportant le premier descripteur temporel et permet une correction comme si le paquet avait été transmis sans gigue.

Il est proposé d'associer à chaque descripteur temporel d'un compteur à transmettre dans le réseau de communication par paquets (comme dans un procédé PCR-like) un descripteur temporel d'un autre compteur que nous appelons le compteur de réseau et qui est déjà synchronisé dans le réseau de communication par paquets par d'autres moyens, tels que décrits dans le standard IEC 61588 par exemple. Les deux descripteurs temporels forment un champ d'information unique et cohérent, la seconde valeur de descripteur temporel (du compteur de réseau) étant utilisée pour corriger la première valeur de compteur.

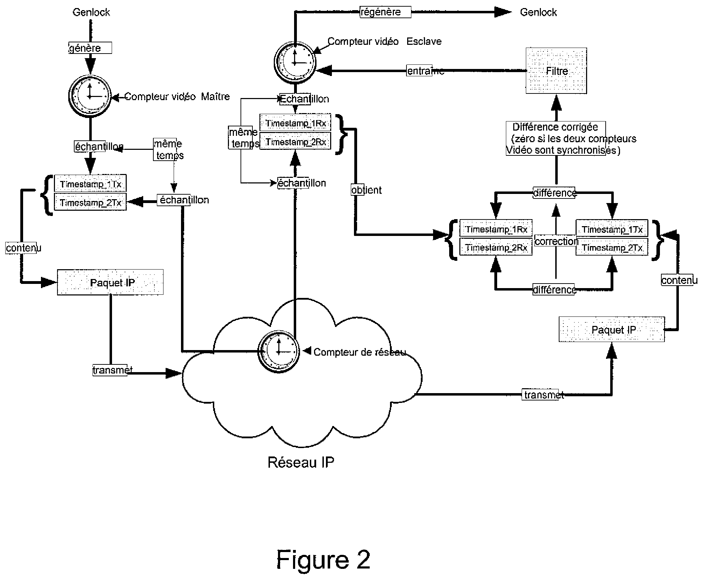

La Figure 2 indique comment le principe d'un double descripteur temporel est utilisé pour la synchronisation de compteur vidéo.

Du côté de l'émission, à partir du signal vidéo Genlock sont tout d'abord dérivées une fréquence et une phase qui entraînent et réinitialisent le compteur vidéo. Ce compteur vidéo est appelé le compteur vidéo maître. A intervalles réguliers, la valeur du compteur vidéo est échantillonnée pour générer un « Descripteur_temporel_1ₜₓ » (« *Timestamp_1Tx* » sur la Figure 2). Au même moment exactement, le compteur de réseau est également échantillonné pour générer un « Descripteur_temporel_2ₜₓ » (« *Timestamp_2Tx* » sur la Figure 2). « Descripteur_temporel_1ₜₓ » et « Descripteur_temporel_2ₜₓ » sont transmis ensemble dans le réseau vers le côté de la réception.

Du côté de la réception, il y a également un compteur vidéo qui est appelé compteur vidéo esclave. Le but est de synchroniser le compteur vidéo esclave sur le compteur vidéo maître. Le signal Genlock qui est régénéré à partir du compteur vidéo esclave sera ensuite synchronisé sur le signal Genlock entraînant le compteur vidéo maître.

Comme pour le côté de l'émission, le compteur vidéo et le compteur de réseau sont régulièrement échantillonnés, générant un « Descripteur_temporel_1ᵣₓ » (« *Timestamp_1Rx* » sur la Figure 2) et un « Descripteur_temporel_2ᵣₓ » (« *Timestamp_2Rx* » sur la Figure 2) qui sont stockés ensemble. L'instant de la génération des descripteurs temporels peut ne pas être synchronisé entre le côté émission et le côté réception. Lorsqu'un paquet est reçu du côté réception, la différence entre « Descripteur_temporel_2ₜₓ » et « Descripteur_temporel_2ₜₓ » est utilisée pour corriger (soustraire de) la différence entre le « Descripteur_temporel_1ₜₓ » et le « Descripteur_temporel_1ₜₓ ». Si le compteur de vidéo esclave est parfaitement synchronisé sur le compteur vidéo maître, la différence *corrigée* est égale à zéro. Si la différence corrigée n'est pas égale à zéro, la fréquence à laquelle le compteur esclave compte doit être modifiée. Un filtre reçoit la différence corrigée et est en charge de réguler la fréquence du compteur vidéo esclave. Les caractéristiques du filtre déterminent les caractéristiques du signal Genlock régénéré.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif apte à émettre des paquets dans un réseau de communication par paquets comportant au moins deux stations, comprenant :
- des moyens pour recevoir un signal ;
- des moyens pour dériver une fréquence et une phase à partir dudit signal reçu ;
- des moyens pour initialiser un compteur, dit compteur maître, au moyen de la fréquence et de la phase dérivées,
**caractérisé en ce qu'**il comporte :
- des moyens pour échantillonner la valeur du compteur maître à intervalles réguliers ;
- des moyens pour générer un premier descripteur temporel "Descripteur_temporel_1_TX" à partir de la valeur échantillonnée du compteur maître ;
- des moyens pour échantillonner un second compteur synchronisé sur toutes les stations du réseau au même instant qu'a lieu l'échantillonnage du compteur maître;
- des moyens pour générer un second descripteur temporel "Descripteur_temporel_2_TX" à partir de la valeur échantillonnée du second compteur;
- des moyens pour transmettre ensemble les deux descripteurs temporels dans le réseau.

2. Dispositif selon la revendication 1, **caractérisé en ce que** le réseau de communication par paquets est un réseau de type IP (Internet Protocol).

3. Dispositif selon la revendication 1 ou 2, **caractérisé en ce que** le second compteur synchronisé sur toutes les stations du réseau l'est au moyen du standard IEC 61588.

4. Dispositif selon la revendication 1, 2 ou 3, **caractérisé en ce que** ledit signal reçu est de type Genlock.

5. Dispositif apte à recevoir des paquets dans un réseau de communication par paquets comportant au moins deux stations, **caractérisé en ce qu'**il comporte :
- des moyens pour échantillonner la valeur d'un premier compteur dit compteur esclave à intervalles réguliers ;
- des moyens pour générer un premier descripteur temporel "Descripteur_temporel_1_RX" à partir de la valeur échantillonnée du compteur esclave ;
- des moyens pour échantillonner un second compteur synchronisé sur toutes les stations du réseau au même instant qu'a lieu l'échantillonnage du compteur esclave ;
- des moyens pour générer un second descripteur temporel "Descripteur_temporel_2_RX" à partir de la valeur échantillonnée du second compteur;
- des moyens pour, à réception d'un paquet comprenant les deux descripteurs temporels "Descripteur_temporel_1_TX" et "Descripteur_temporel_2_TX", transmis dans le réseau par le dispositif de la revendication 1, corriger la différence entre "Descripteur_temporel_1_TX" et "Descripteur_temporel_1_RX" au moyen de la différence entre "Descripteur_temporel_2_TX" et "Descripteur_temporel_2_RX" ; et
- des moyens pour réguler le compteur esclave en fonction de ladite différence corrigée.

6. Dispositif selon la revendication 5, **caractérisé en ce qu'**il comporte des moyens pour stocker ensemble les deux descripteurs temporels "Descripteur_temporel_1_RX" et "Descripteur_temporel_2_RX".

7. Dispositif selon la revendication 5 ou 6, **caractérisé en ce que** le réseau de communication par paquets est un réseau de type IP (Internet Protocol).

8. Dispositif selon la revendication 5, 6 ou 7, **caractérisé en ce que** le second compteur synchronisé sur toutes les stations du réseau l'est au moyen du standard IEC 61588.

9. Dispositif selon l'une quelconque des revendications 5 à 8, **caractérisé en ce qu'**il comporte un filtre qui reçoit la différence corrigée et régule le compteur esclave.

10. Dispositif selon la revendication 9, **caractérisé en ce que** les caractéristiques du filtre déterminent les caractéristiques d'un signal régénéré.

11. Dispositif selon la revendication 10, **caractérisé en ce que** le signal régénéré est de type Genlock.

## Patentansprüche

1. Vorrichtung, geeignet zur Übertragung von Paketen in einem paketorientierten Kommunikationsnetz, das mindestens zwei Stationen umfasst, bestehend aus:
- Mitteln zum Empfang eines Signals
- Mitteln zur Ableitung einer Frequenz und einer Phase anhand des besagten empfangenen Signals
- Mitteln zur Initialisierung eines Zählers, eines so genannten Master-Zählers, mittels der abgeleiteten Frequenz und Phase,
**dadurch gekennzeichnet, dass** sie besteht aus:
- Mitteln zum Abtasten des Wertes des Master-Zählers in regelmäßigen Abständen,
- Mitteln zur Erzeugung eines ersten temporären Deskriptors "temporärer_Deskriptor_1_TX" anhand des abgetasteten Wertes des Master-Zählers,
- Mitteln zum Abtasten eines zweiten, mit allen Stationen des Netzes synchronisierten Zählers zum gleichen Zeitpunkt, zu dem das Abtasten des Master-Zählers stattfindet,
- Mitteln zur Erzeugung eines zweiten temporären Deskriptors "temporärer_Deskriptor_2_TX" anhand des abgetasteten Wertes des zweiten Zählers,
- Mitteln zur gemeinsamen Übertragung der beiden temporären Deskriptoren in dem Netz.

2. Vorrichtung nach Anspruch 1, **dadurch gekennzeichnet, dass** das paketorientierte Kommunikationsnetz ein Netz vom Typ IP (Internet Protocol) ist.

3. Vorrichtung nach Anspruch 1 oder 2, **dadurch gekennzeichnet, dass** der zweite, mit allen Stationen des Netzes synchronisierte Zähler dies mittels Standard IEC 61588 ist.

4. Vorrichtung nach Anspruch 1, 2 oder 3, **dadurch gekennzeichnet, dass** das besagte empfangene Signal vom Typ Genlock ist.

5. Vorrichtung, geeignet zum Empfang von Paketen in einem paketorientierten Kommunikationsnetz, das mindestens zwei Stationen umfasst, **dadurch gekennzeichnet, dass** sie besteht aus:
- Mitteln zum Abtasten des Wertes eines ersten Zählers, eines so genannten Slave-Zählers, in regelmäßigen Abständen,
- Mitteln zur Erzeugung eines ersten temporären Deskriptors "temporärer_Deskriptor_1_RX" anhand des abgetasteten Wertes des Slave-Zählers,
- Mitteln zum Abtasten eines zweiten, mit allen Stationen des Netzes synchronisierten Zählers zum gleichen Zeitpunkt, zu dem das Abtasten des Slave-Zählers stattfindet,
- Mitteln zur Erzeugung eines zweiten temporären Deskriptors "temporärer_Deskriptor_2_RX" anhand des abgetasteten Wertes des zweiten Zählers,
- Mitteln, um beim Empfangen eines Pakets bestehend aus den zwei temporären Deskriptoren "temporärer_Deskriptor_1_TX" und "temporärer-Deskriptor_2_TX", die im Netz durch die Vorrichtung des Anspruchs 1 übertragen werden, die Differenz zwischen "temporärem_Deskriptor_1_TX" und "temporärem_Deskriptor_1_RX" mittels der Differenz zwischen "temporärem_Deskriptor_2_TX" und "temporärem_Deskriptor_2_RX" zu korrigieren, und
- Mitteln zur Regulierung des Slave-Zählers in Abhängigkeit von der besagten korrigierten Differenz.

6. Vorrichtung nach Anspruch 5, **dadurch gekennzeichnet, dass** sie Mittel für die gemeinsame Speicherung der beiden temporären Deskriptoren "temporärer_Deskriptor_1_RX" und "temporärer_Deskriptor_2_RX" umfasst.

7. Vorrichtung nach Anspruch 5 oder 6, **dadurch gekennzeichnet, dass** das paketorientierte Kommunikationsnetz ein Netz vom Typ IP (Internet Protocol) ist.

8. Vorrichtung nach Anspruch 5, 6 oder 7, **dadurch gekennzeichnet, dass** der zweite, mit allen Stationen des Netzes synchronisierte Zähler dies mittels Standard IEC 61588 ist.

9. Vorrichtung nach einem der Ansprüche 5 bis 8, **dadurch gekennzeichnet, dass** sie einen Filter umfasst, der die korrigierte Differenz empfängt und den Slave-Zähler reguliert.

10. Vorrichtung nach Anspruch 9, **dadurch gekennzeichnet, dass** die Eigenschaften des Filters die Eigenschaften eines regenerierten Signals bestimmen.

11. Vorrichtung nach Anspruch 10, **dadurch gekennzeichnet, dass** das regenerierte Signal vom Typ Genlock ist.

## Claims

1. Device able to emit packets in a packet communication network comprising at least two stations, including:
- means for receiving a signal,
- means for deriving a frequency and a phase from said received signal,
- means for initialising a counter, referred to as the master counter, by means of the derived frequency and phase,
**characterized in that** it comprises:
- means for sampling the master counter value at regular intervals,
- means for generating a first temporal descriptor "Temporal_descriptor_1_TX" from the sampled value of the master counter,
- means for sampling a second counter synchronised with all the stations of the network at the same time as the sampling of the master counter,
- means for generating a second temporal descriptor "Temporal_descriptor_2_TX" from the sampled value of the second counter,
- means for transmitting together the two temporal descriptors in the network.

2. Device according to claim 1, **characterized in that** the packet communication network is an IP (Internet Protocol) type network.

3. Device according to claims 1 or 2, **characterized in that** the second counter synchronized on all the network stations is synchronised by means of the IEC 61588 standard.

4. Device according to claim 1, 2 or 3, **characterized in that** said received signal is of Genlock type.

5. Device able to receive packets in a packet communication network comprising at least two stations, **characterized in that** it comprises:
- means for sampling the value of a first counter referred to as the slave counter, at regular intervals.
- means for generating a first temporal descriptor "Temporal_descriptor_1_RX" from the sampled value of the slave counter,
- means for sampling a second counter synchronised with all the stations of the network at the same time as the sampling of the slave counter,
- means for generating a second temporal descriptor "Temporal_descriptor_2_RX" from the sampled value of the second counter,
- means for, on reception of a packet comprising two temporal descriptors "Temporal_descriptor_1_TX" and "Temporal_descriptor_2_TX" transmitted in the network by the device of claim 1, correcting the difference between "Temporal_descriptor_1_TX" and "Temporal_descriptor_1_RX" by means of the difference between "Temporal_descriptor_2_TX" and "Temporal_descriptor_2_RX", and
- means for controlling the slave counter according to said corrected difference.

6. Device according to claim 5, **characterised in that** it comprises the means to store the two temporal descriptors "Temporal_descriptor_1_RX" and "Temporal_descriptor_2_RX".

7. Device according to claim 5 or 6, **characterized in that** the packet communication network is an IP (Internet Protocol) type network.

8. Device according to claim 5, 6 or 7, **characterized in that** the second counter synchronized on all the network stations is synchronised by means of the IEC 61588 standard.

9. Device according to any one of claims 5 to 8, **characterised in that** it comprises a filter that receives the corrected difference and controls the slave counter.

10. Device according to claim 9, **characterised in that** the filter characteristics determine the characteristics of a regenerated signal.

11. Device according to claim 10, **characterised in that** the regenerated signal is of the Genlock type.
